# EUROPEAN PATENT APPLICATION

(11) **EP 2 381 352 A2**
(43) Date of publication of application: **26.10.2011**
(21) Application number: 11163758.3
(22) Date of filing: 26.04.2011
(51) Int. Cl.: G06F 3/048

(54) **Apparatus, and associated method, for selecting multiple files at a consumer electronics device**

(30) Priority: 23.04.2010 US 327520 P; 25.02.2011 US 35750
(71) Applicant: Research In Motion Limited, Waterloo, ON N2L 3W8 (CA)
(72) Inventor: Lindsay, Donald James, Waterloo Ontario N2L 3W8 (CA); Kropf-Untucht, Damon Noel, Waterloo Ontario N2L 5Z5 (CA); Yach, David Paul, Waterloo Ontario N2L 3W8 (CA); Smith, Michael Gregory, Waterloo Ontario N2L 3L3 (CA)
(74) Representative: Roberts, Gwilym Vaughan

(57) **Abstract**

A user interface apparatus, and an associated method, for facilitating user selection of multiple files stored at a consumer electronic device, such as a mobile communication station. A contiguous selection procedure is provided in which a user selects a pair or more of file representations displayed upon a touch screen. Representations of files contiguous to the selected file representations are ascertained, and such files are aggregated. A non-contiguous selection procedure is also provided. A detector detects selection to enter into a multi-select mode. And, a detection is further made of selection made by a user of files to be aggregated.

## Description

### Cross-Reference To Related Application

This application claims priority to U.S. Provisional Application No. 61/327,520 titled "Apparatus, And Associated Method, For Selecting Multiple Files At A Consumer Electronics Device" filed on April 23, 2010, the contents of which are incorporated in entirety by reference.

The present disclosure relates generally to a manner by which to select, at a user interface of a mobile communication station or other consumer electronics device, a plurality of files, such as images, stored at the device. More particularly, the present disclosure relates to a user interface apparatus, and an associated method, by which to select a plurality of the files, which have icons or other representations displayed on a touch screen display.

A user initiates multiple-file selection by selecting operation of the device to select multiple files. Files are then selected and the selected files are retrieved and aggregated. The selection operation is intuitive and permits the aggregation of the multiple files requiring only a limited number of user input instructions.

### Background

The use of mobile devices for both data manipulation and communications is pervasive in modern society. Such devices provide many varied functionalities and services incorporating advancements in communication and processing technologies, successive generations of such devices have been developed and deployed, each generation having increased functionalities. For instance, mobile communication devices are currently available that provide not only voice communications, services also data-intensive services relating to the manipulation of and communication of data. Additional types of mobile devices have been developed and deployed, providing a wide array of functionalities and services.

Mobile communication devices regularly include memories having storage capacities permitting storage of a significant number of files, such as files forming digital images, including those, e.g., obtained by a digital-camera functionalities of the devices. Audio and multi-media files are also exemplary of files that are sometimes stored and/or created at a mobile communication device.

A user of the device controls its operation by way of a user interface. Different mobile devices utilize different types of user interfaces, which are used to input instructions and commands to control operation of the devices and to provide information generated pursuant to operation of the device.

Instructions and information are input by a user of the device by, e.g., actuation of input keys and buttons, such as keys arranged to form a QWERTY keyboard to facilitate alpha numeric text entry, keys associated with dedicated functions, and both audio and video transducers that transduce input audio and video information. User-interface output devices include, e.g., audio transducers and video transducers. An exemplary video transducer comprises a display screen. So-called, touch screens are sometimes used as part of a user interface at a mobile device. A touch screen not only displays information but also provides for input of information. Icons, or other symbols and representations, displayed at the touch-screen display, define input locations i.e., keys, actuatable by a user by touching the screen at a location proximate to a displayed representation.

User interfaces of various of such devices provide for display of digital files stored at such devices. Additionally, such devices also sometimes provide for display of symbols, icons, or other representation of such files. A user is able to select viewing of, or other action related to, a file. For instance, a plurality of digital photos might be stored at the mobile device. A screen display of the mobile device displays representations of some, or all, of the plurality of digital photos. A user is able to select a selected digital photo by selecting the file representation thereof. Responsive to selection, the selected file is retrieved, permitting further operations to be performed thereon. Analogously, a plurality of audio or multimedia files are sometimes also stored at the mobile device. In analogous manner, some user interfaces also provide for display of representations of the audio or multi-media files. And, in similar manner, a user of the mobile device selects, from amongst the displayed file representations, a file for which further operations are to be performed. And, responsive to such selection, the selected file is retrieved to permit the further operations to be performed thereon:

While existing user interfaces provide for the display of the representations of the files and for user selection of files, the actions required of a user generally become somewhat unwieldy when multiple files are selected. And, while various user interface devices or various consumer electronic devices make use of various features to facilitate input commands, existing user interfaces generally fail adequately to address this problem.

For instance, an existing mobile device provides for a two-finger, press-and-hold operation on a text field to bring up a magnification loupe and subsequent dragging of the user's fingers to select text. This device also provides for interpretation of a two-finger, press-and-hold release without selecting any text to bring up another context menu. Additionally, in an existing word processing program, multiple items are selectable by holding down a control key and making further keyboard entry. And, a proposal is also known by which to provide for two-finger, manual, multi-target selection. None of these devices, however, specifically address the problems related to selection of multiple files at a mobile device.

An improved user interface to facilitate user selection and control of multiple files at a mobile device would therefore be advantageous.

It is in light of this background information related to mobile devices that the significant improvements of the present disclosure have evolved.

### Brief Description of the Drawings

Figure 1 illustrates a functional block diagram of an exemplary mobile device that operates pursuant to an implementation of the present disclosure.

Figure 2 illustrates a representation of an exemplary screen display and file-representation grouping pursuant to operation of an implementation of the present disclosure.

Figure 3 illustrates a representation, similar to that shown in Figure 2, but of another exemplary screen display use pursuant to operation of another implementation of the present disclosure.

Figure 4 illustrates a process diagram representative of the process of operation of an implementation of the present disclosure.

Figure 5 illustrates a process diagram representative of the process of operation of another implementation of the present disclosure.

### Detailed Description

The present disclosure, accordingly, advantageously provides a user-interface apparatus, and an associated method, by which to select, at a user interface of a mobile communication station, or other consumer electronic device, a plurality of files, such as digital images, stored at the device.

Through operation of an implementation of the present disclosure, a manner is provided by which to select a plurality of the files, which have icons or other representations, displayed on a touch-screen display.

In one aspect of the present disclosure, a user of a consumer electronic device initiates multi-file selection by selecting multi-select operation of the device and then identifying the icons or other representations whose associated files are to be selected. The files are selected, e.g., to be shared with others or to be edited. The selection operation is intuitive and permits the aggregation of the multiple files, requiring only a limited number of user input instructions.

In another aspect of the present disclosure, a detector is provided that detects touch-screen inputs, generated by a user, such as when a user places a finger or stylus in proximity with the touch screen. Responsive to detection of a specific input, selection of multiple files is provided.

In another aspect of the present disclosure, a user touches the touch screen at two points simultaneously, that is to say, during overlapping intervals, concurrent intervals, or within a selected time period to initiate selection of multiple files.

In another aspect of the present disclosure, a detector detects the touching of a touch screen upon two file representations. Responsive to the detection, selection of all files having representations displayed on the touch screen between the two selected representations, selected by the user at the touch screen. That is to say, selection is made of all files having associated representations displayed on the display screen topographically in between the two selected files.

In another aspect of the present disclosure, the files having representations positioned topographically in between the two selected files and aggregated together with the two files selected by the user of the mobile device. The aggregated files are then more easily treated as a group, such as by attachment to an email for sending to another or to edit the file contents. Selection of the files is thereby made in a contiguous manner in which files in proximity to the selected file representations on the display screen, such as topographically in-between the selected pair of files, are selected.

In another aspect of the present disclosure, a user selects to enter a multi-select mode through actuation of a multi-select button. The multi-select button comprises, for instance, a physical actuator embodied at the mobile device or an input key displayed upon a touch screen display. A user actuates the multi-select button to enter the mobile device into the multi-select mode. When in the multi-select mode, the mobile device operates to aggregate selected files to permit further operations thereon on a group basis.

In another aspect of the present disclosure, when the mobile device is in the multi-select mode of operation, the user selects additional files to be aggregated merely by identifying the files that are to be aggregated. Identification is made, for example, by touching a touch-screen display at locations proximate to the representation of the file displayed on the screen. In one implementation, a single, momentary touch or tap upon the icon other representation indicates selection of the associated files to be aggregated. When additional selections are no longer desired, the user of the mobile device causes the mobile device to acts at the multi-select mode. The user causes the mobile device to exit the multi-select mode by again actuating the multi-select button. Detection of such actuation causes the mobile device to exit the multi-select mode and return to a normal mode of operation.

In another aspect of the present disclosure, the user causes the mobile device to enter into the multi-select mode by double tapping a selection. That is to say, the user touches the representation of a file at least two times within a selected time. Detection of this double tapping causes the mobile device to enter into the multi-select mode. Subsequent selections are made by a single tap or touch upon the displayed representation of a file that is to be selected. And, the user of the mobile device causes exit out of the multi-select mode, also effectuated by double-tapping a representation of a file. That is to say, the multi-select mode is turned off by double-tapping a selection and that item is also included in the aggregate list.

Because the files are aggregated, further operation relating to the files are more easily carried out.

In these and other aspects, therefore, an apparatus, and an associated method, is provided for facilitating selection of files at a mobile communication device. A display device is configured to display representations of a plurality of the files. A detector is configured to detect selection made by way of the display device to aggregate the plurality of files. An aggregator is configured to aggregate the plurality of the files responsive to the selection detected by the detector.

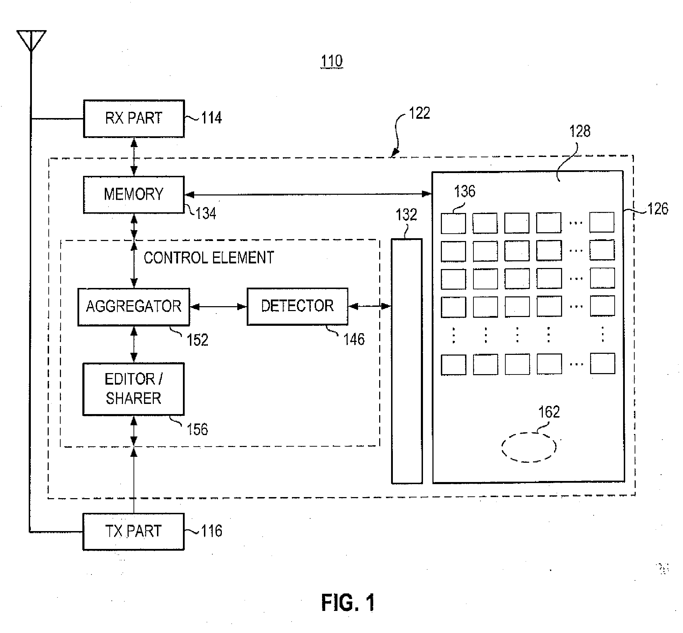

Turning first to Figure 1, a mobile station, shown generally at 110, includes transceiver circuitry, having a receive part 114 and a transmit part 116. The mobile-station 110 is exemplary of a mobile device at which an implementation of the present disclosure is embodied. While the following description shall describe operation of the exemplary implementation in which the mobile device includes the functionality of a mobile station, it should be understood that an implementation of the present disclosure is analogously implementable in any of various other types of consumer electronic devices. Accordingly, the following description should be considered to be by way of example only.

The mobile station is operated by a user and is typically of compact dimensions, permitting hand carriage by a user. The transmit and receive parts provide for communication with a remote device (not shown) pursuant to effectuation of a communication service. As mentioned previously, mobile communication stations provide not only voice services but also data communication services as well as data processing, and other, services and functionalities.

The mobile communication station includes a user interface apparatus 122 of an implementation of the present disclosure. The user interface apparatus includes both user input and user output elements. The apparatus 122 includes a touch screen 126, which includes a display screen 128. The touch screen operates both as an output element for displaying output information and as an input element that receives inputs applied to the touch screen. A sensor 132 is shown proximate to the display screen 128. The sensor 132 is functionally representative of any of various types of detectors that detect inputs at the display screen of the touch screen. The touch screen is constructed in any desired manner and forms, e.g., a resistive touch screen, a surface acoustic wave touch screen, a capacitive touch screen, a strain-gage touch screen, an optical imaging touch screen, or of any of various other constructions.

The mobile communication station is further shown to include a memory element 134 that stores and caches files of any of various types including, e.g., digital photo files, such as JPEG-formatted file, audio files and multi-media files. The files stored at the memory element are accessible during operation of the mobile communication station.

In the exemplary implementation shown in Figure 1, representations of files stored at the memory element 132 are displayable upon the display screen 128 of the touch screen. As shown in Figure 1, a plurality of symbols or icons, i.e., representations 136 of the stored files are displayed upon the display element. In the exemplary implementation, the representations are arranged in an array of rows and columns. In other implementations, the representations are arranged in other manners and, in one implementation, comprise a list of representations identifying the files. A control element 142, of which accesses the memory element 132 and is in connectivity with the touch screen 126 causes the display of the representations in a desired, display manner.

The control element provides additional control functions used to control operation of the mobile communication station. Additionally, pursuant to an implementation of the present disclosure, the control element also includes a detector 146, an aggregator 152, and a file operator, here an editor and sharer 156. The elements 146, 152, and 156 of the control element are implemented in any desired manner, including hardware implementations, software implementations, and combinations thereof

In operation, the detector detects, such as by way of the sensor 132, inputs generated at the touch screen 126 that indicate selection by a user of the mobile communication station to operate the mobile communication station pursuant to multi-touch selection. When operated pursuant to multi-touch selection, a user of the mobile communication station is able more quickly and easily to select multiple numbers of files, whose representations are displayed at the display screen 128. When selected, the selected files are aggregated by the aggregator 152. And, once aggregated, additional operations are performable upon the aggregated files. For instance, the aggregated files are attachable to an email, or other, message sent by the mobile communication station. Or, editing operations are performable upon the aggregated files. Other operations are analogously performable upon the aggregated files.

In one implementation, the detector operates to detect simultaneous, or near-simultaneous, touching or tapping of the touch screen upon representation of files of displayed at the display device. In this implementation, contiguous selection is carried out. That is to say, the detector detects the locations on the display that are selected by the user and also ascertains the files whose representations are contiguous to the selected representations. In the exemplary implementation, the detector detects representations of files positioned topographically in-between the user-selected representations.

Once the user-selected and further-selected representations are identified and indications provided to the aggregator, the aggregator retrieves the files from the memory element and aggregates the retrieved files into an aggregated group of files. Further operations are performable upon the retrieved files, once aggregated. Thereby, a user is able to cause selection of a plurality of files merely by selecting two of the displayed representations, thereby to cause the retrieval from memory of the plurality of files while requiring the user to carry out the single operation of simultaneously, or nearly so, the pair file representations on the display device.

In an alternate implementation, the detector operates to detect selection by a user to enter the mobile communication station into a multi-select mode. In this implementation, a multi-select button 162 is provided. In the illustration of Figure 1, the multi-select button 162 is displayed upon the display device 128 of the touch screen. In an alternate implementation, the button 162 comprises a physical actuator, such as an actuator mounted at a housing of the mobile communication station. In this implementation, the detector operates to detect user actuation of the multi-select button. When embodied at the screen display, a user selects the multi-select mode by touching or tapping the screen display approximate to the button 162. And, in an implementation in which the button 162 comprises a physical actuator, the detector detects the user's actuation of the physical actuator.

Subsequent to detection of the selection by the user to enter into the multi-select mode, the detector monitors for subsequent selection by the user of files to be aggregated. The user selects a file for aggregation by touching or tapping the display screen approximate to a representation of the file to be selected. Selection is made, for instance, by a single tap or touch upon the representation. Each time in which the detector detects such selection, an indication is provided to the aggregator 152, and the aggregator causes the associated file to be retrieved. When the user completes selection, the user again actuates the multi-select button. Responsive to detection by the detector of the multi-select button, the mobile communication station is caused to exit the multi-select mode. In this implementation, selection is non-contiguous for the reason that the user selects any desired representation of a file to be aggregated.

In an alternate implementation, non-contiguous selection is also provided. But, in this alternate implementation, rather than use of a multi-select button, a user selects entry into the multi-select mode by tapping or touching a representation 136 two times or other selected pattern, within a selected time period. The detector detects such multiple, sequential touch and causes entry into the multi-select mode. Exit out of the multi-select mode is analogously carried out.

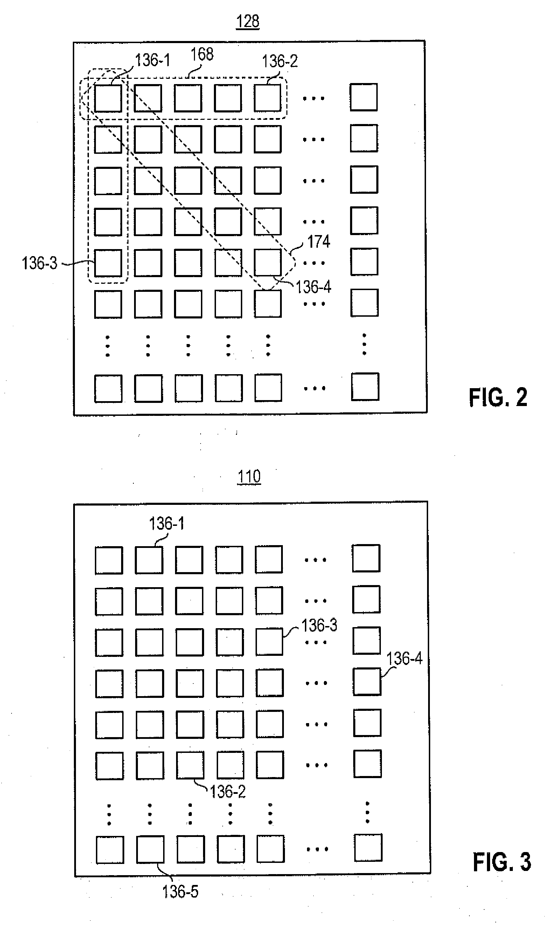

Turning next to Figure 2, an exemplary display screen 128 of the mobile communication station 110 (shown in Figure 1), is again shown together with representations 136 of files stored at the memory element 132 (shown in Figure 1). Here, contiguous selection operation is represented. As mentioned previously, when using contiguous selection, the user selects a pair of representations of files, and selection is made of contiguous files, such as files topographically positioned in-between the two selected file representations.

By way of example, a first group 168 of file representations is formed when the user selects the representations 136-1 and 136-2. A group 172 is formed when the user selects the representations 136-1 and 136-3. And, a third group 174 is formed when the user selects the representations 136-1 and 146-4. Additional, and alternate, selections can analogously be represented.

Figure 3 also illustrates the display screen 128 having an array of representations 136 of files displayed thereon. Here, non-contiguous selection operation is represented. A multi-select mode button 162 is also shown in the Figure. In the implementation, the user selects entry into the multi-select mode by actuating, i.e., touching or tapping, the multi-select button 162. Subsequently, the user selects files to be aggregated by, sequentially, selecting representations of such files that are displayed on the screen display. Here, for purposes of example, the user selects, sequentially, the files represented by the representation 136-1, 136-2, 136-3, 136-4, and 136-5. Selection is made by touching the display screen proximate to the display representations.

Also, as noted previously, in an alternate implementation, rather than use of a multi-select button 162, the user causes entry into the multi-select mode of operation by touching a first of the representations two, or more, times within a selected time period.

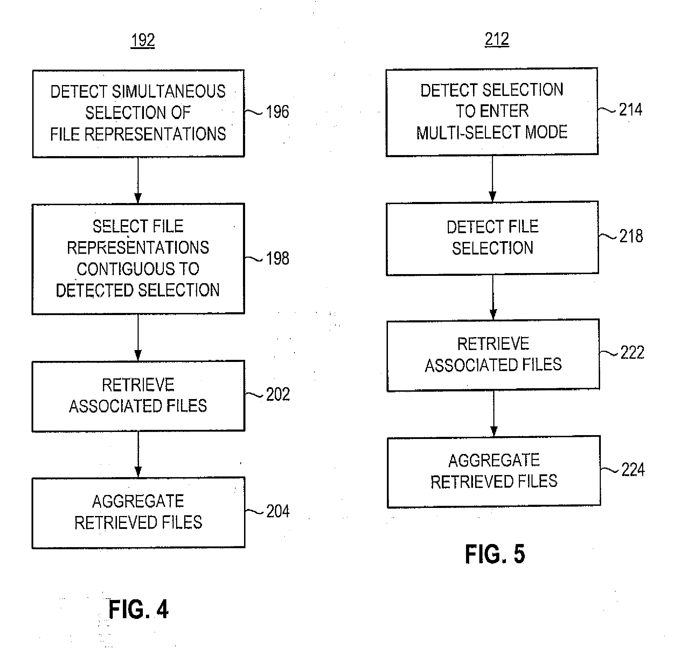

Figure 4 illustrates a process, shown generally at 192, representative of operation of an implementation of the present disclosure by which contiguous selection of files to be aggregated is made. First, and as indicated by the block 196, detection is made of simultaneous, or near-simultaneous, selection by the user at least two file representations on the mobile communication station, display screen. Then, and as indicated by the block 198, selection is automatically made of files having file representations contiguous to the user-selected representations. And, as indicated by the block 202, the associated files are retrieved. Then, and as indicated by the block 204, the retrieved files are aggregated.

Figure 4 illustrates a process, shown generally at 212, representative of non-contiguous selection operation of an implementation of the present disclosure. Here, and as indicated by the block 214, selection of entry into a multi-select mode is detected. Selection to enter the multi-select mode is performed by a user, e.g., by actuating a multi-select button or by touching a selected file representation more than one time within a selected time period.

Then, and as indicated by the block 218, detection is made of file selections of files to be aggregated. Detection is made, for example, by detecting user selection of a representation of the file by touching the display screen upon which the representations are displayed in proximity to the representation. Then, and as indicated by the block 222, the associated files are retrieved. And, as indicated by the block 224, the files are aggregated.

Thereby, a manner is provided by which to permit a user of a mobile communication station, or other electronic device, easily to select multiple files in a quick and intuitive manner. Once selected, further operations are performed upon the files, such as to facilitate sharing or editing of the files.

Presently preferred implementations of the disclosure and many of its improvements and advantages have been described with a degree of particularity. The description is of preferred examples of implementing the disclosure, and the description of examples is not necessarily intended to limit the scope of the disclosure. The scope of the disclosure is defined by the following claims.

## Claims

1. An apparatus for facilitating selection of files at a mobile device, the apparatus comprising:
a display device configured to display representations of a plurality of the files;
a detector configured to detect selection made by way of the display device to aggregate the plurality of the files; and
an aggregator configured to aggregate the plurality of the files responsive to the selection detected by the detector.

2. The apparatus of claim 1 wherein the representations of the plurality of the files displayed by the display device comprise icons of each of the plurality of the files.

3. The apparatus of claim 1 wherein the detector is configured to detect locations of touch inputs, upon the display device, the locations of the touch inputs determinative of the selection to aggregate the plurality of the files.

4. The apparatus of claim 3 wherein the detector is configured to detect touch inputs upon more than one of the representations of the plurality of the files with a selected period, the touch inputs within the selected period indicative of selection to aggregate the plurality of the files.

5. The apparatus of claim 4 wherein the aggregator is configured to aggregate files whose representations are displayed on the display device between the representations upon which the detector detects the simultaneous touch inputs.

6. The apparatus of claim 5 wherein the aggregator is further configured to include, in the plurality of files aggregated by the aggregator, the files associated with the representations upon which the detector detects the simultaneous touch inputs.

7. The apparatus of claim 4 wherein the aggregator is configured to aggregate all files associated with displayed representations positioned topographically between the more presentations upon which the detector detects the touch inputs.

8. The apparatus of claim 4 wherein the inputs within the selected period indicative of the selection to aggregate the plurality of files comprises touch inputs during at least partially concurrent times.

9. The apparatus of claim 1 further comprising a multi-selector input button, actuation of which comprises selection to enter into a multi-select mode at the mobile communication device, entry into the multi-select mode permitting operation of the aggregator to aggregate the plurality of the files.

10. The apparatus of claim 9 wherein the multi-selector input button is configured to be displayed on the display device.

11. A method for facilitating selection of files at a mobile device, the method comprising:
displaying representations of a plurality of the files on a display device;
detecting selection made by way of the display device to aggregate the plurality of the files; and
aggregating the plurality of the files responsive to the selection detected during the detecting.

12. The method of claim 11 wherein the detecting comprises detecting touch inputs upon more than one of the representations of the plurality of files within a selected period.

13. The method of claim 12 wherein the detecting further comprises detecting locations of the touch inputs upon the display device.

14. The method of claim 13 wherein the aggregating comprises aggregating all files associated with displayed representations position topographically between representations upon which detection is made during the detecting of the touch inputs.

15. The method of claim 11 wherein the detecting comprises detecting selection to enter into a multi-select mode at the mobile device, entry into the multi-select mode permitting aggregation during the aggregating of the plurality of files.
